# EUROPÄISCHE PATENTSCHRIFT

(11) **EP 2 988 188 B1**
(45) Veröffentlichungstag und Bekanntmachung des Hinweises auf die Patenterteilung: **17.02.2021**
(21) Anmeldenummer: 15173473.8
(22) Anmeldetag: 23.06.2015
(51) Int. Cl.: G05D 23/19, F24D 19/10

(54) **THERMOSTATEINHEIT UND VERFAHREN ZUR AUTOMATISCHEN REGELUNG DER RAUMTEMPERATUR**
THERMOSTAT UNIT AND METHOD OF AUTOMATICALLY REGULATING THE ROOM TEMPERATURE
UNITÉ DE THERMOSTAT ET PROCÉDÉ DE RÉGULATION AUTOMATIQUE DE LA TEMPÉRATURE AMBIANTE

(30) Priorität: 14.08.2014 DE 102014111662
(43) Veröffentlichungstag der Anmeldung: 24.02.2016
(73) Patentinhaber: Xpertec GmbH, 87700 Memmingen (DE)
(72) Erfinder: Suic, Orhan, 87700 Memmingen (DE)
(74) Vertreter: Petrow, Olga

(56) Entgegenhaltungen:
- DE-A1- 19 548 841
- DE-A1- 19 738 819
- DE-A1-102008 024 734
- US-A1- 2012 128 025

## Beschreibung

Die Erfindung betrifft eine sensorgesteuerte Thermostateinheit. Weiterhin betrifft die Erfindung ein Verfahren zur automatischen Regelung der Raumtemperatur mit der zuerst beschriebenen Thermostateinheit.

Die bedarfsgerechte, automatische Regelung der Raumtemperatur wird in Zeiten hoher Energiekosten und Zielen zur Einsparung von CO₂-Emissionen immer wichtiger. Im Bereich der Heizungsthermostate sind bereits seit vielen Jahren elektronisch geregelte Thermostate erhältlich, die die jeweiligen Sollwerte zur Temperaturregelung einer Uhr- und Kalenderfunktion entnehmen. Beispielsweise lassen sich hier Zeiten für eine Nachtabsenkung der Raumtemperatur einprogrammieren, so dass ab einer bestimmten Uhrzeit die Raumtemperatur reduziert wird und am nächsten Morgen ab einer bestimmten Uhrzeit wieder erhöht wird. Nachteilig an dieser Art nur zeitlich gesteuerter Thermostate ist, dass keine Flexibilität gegenüber veränderter Gewohnheiten der Personen, die den Raum benutzen, gegeben ist. So würde an einem Feiertag, der sonst ein Arbeitstag ist, eine normale Temperaturregelung für einen Arbeitstag stattfinden. Der Thermostat würde nicht berücksichtigen, dass Personen abends länger im Raum und aktiv sind und am nächsten Morgen länger schlafen als gewöhnlich. Um die Regelung der Raumtemperatur wieder bedarfsgerecht zu machen, müsste entweder das hinterlegte Programm geändert werden oder auf manuelle Regelung umgeschaltet werden. Ein Umschalten auf manuelle Regelung bringt dann oft mit sich, dass die Automatik nicht mehr aktiviert wird und daher keine Temperaturabsenkung in der Nacht und damit keine Reduzierung der Heizkosten mehr vorgenommen wird.

Um die bedarfsgerechte Regelung der Raumtemperatur weiter zu verbessern gibt es mehrteilige Systeme für sowohl Wohn- als auch Geschäftsbereiche, die neben der Uhr- und Kalenderfunktion auch noch Signale verschiedener Sensoren zur Regelung verwenden. Diese Systeme weisen eine zentrale Steuereinheit auf, die dann mit räumlich verteilten Sensoren vernetzt werden. Nachteilig an solchen Systemen ist der hohe Aufwand für Einbau und Inbetriebnahme. Weiterhin sind für die Installation Fachkenntnisse im Bereich Netzwerktechnik erforderlich, was den Einbau für den nicht geschulten Anwender weiter erschwert. Dieser hohe Aufwand fällt vor allem beim Nachrüsten von Gebäuden, die bisher eine ältere Technologie verwenden, ins Gewicht. Räumlich verteilte Systeme zeigen den weiteren Nachteil, dass, wenn eine Person in einem Raum manuell in die Temperaturregelung eingreifen will, sie dies meist nur über die zentral angeordnete Steuerung tun kann. Dies ist kompliziert und aufwändig.

Die Bewegungssensoren für solche räumlich verteilten Systeme sind meist an den Decken der Räume angebracht und erfassen Bewegungen von oben gesehen nach unten. Somit ist es möglich, dass auch Bewegungen und damit die Anwesenheit von Haustieren, wie zum Beispiel Katzen, erfasst werden und zwar in gleicher Art wie die Anwesenheit von Personen. Die dadurch erzeugten Informationen zur Anwesenheit von Personen führen zu einer Anhebung der Raumtemperatur. Dies ist an dieser Stelle ungewollt, da die für anwesende Menschen angenehme Raumtemperatur beim bloßen Anwesendsein von Haustieren nicht erforderlich ist. Ursache der hier ungewollten Anhebung der Raumtemperatur ist die, dass herkömmliche Bewegungssensoren Mensch und Haustier nicht unterscheiden können, was sich nachteilig auf das Regelverhalten auswirkt.

US 2012/0128025 zeigt eine Thermostateinheit mit einem Bewegungssensor.

Ausgehend von diesem Stand der Technik ist es Aufgabe der Erfindung eine sensorgesteuerte Thermostateinheit zur automatischen und bedarfsgerechten Regelung der Raumtemperatur vorzuschlagen, welches mit geringem Aufwand montiert bzw. nachgerüstet werden kann. Die Thermostateinheit soll mit einer höheren Genauigkeit die Anwesenheit von Personen im Raum erkennen und von der Anwesenheit von Haustieren unterscheiden. Weiterhin soll ein Verfahren vorgeschlagen werden, welches unter Verwendung des Thermostats und dessen Sensoren eine intelligente Regelung der Raumtemperatur ermöglicht.

Die Erfindung ist durch die nachfolgende Ansprüche definiert.

Die Aufgabe der Erfindung wird gelöst durch eine Thermostateinheit nach dem Anspruch 1 umfassend an oder in einem Gehäuse angeordnet einen Temperaturfühler, einen Temperaturregler, mindestens einen Lichtsensor, eine Datenverarbeitungseinheit, und mindestens einen, wenigstens zwei voneinander verschiedene Erfassungsfelder umfassenden Bewegungssensor, wobei eine Temperaturregelung basierend auf wenigstens einem Sensorsignal vorgesehen ist. Durch die Anordnung in oder an einem einzigen Gehäuse ist die Thermostateinheit kompakt und in nur einem Arbeitsschritt mit sehr wenig Aufwand zu montieren.

Die Erfindung umfasst eine Thermostateinheit, die einen Temperaturfühler zur Aufnahme der aktuellen Raumtemperatur aufweist. Die Werte dieses Temperaturfühlers werden kontinuierlich mit dem jeweils anliegenden Sollwert verglichen. Der ebenfalls zur Erfindung gehörige Temperaturregler regelt dann gegebenenfalls die Heizleistung nach, wenn der aktuelle Wert vom Sollwert abweicht. Weiterhin weist die Thermostateinheit mindestens einen Lichtsensor auf. Die Werte dieses Lichtsensors werden als Eingangsinformation dazu verwendet, die Anwesenheit oder Aktivität von Personen im Raum oder die Tageszeit zu erkennen. Die Eingangsinformationen werden von einer Datenverarbeitungseinheit in Signale zur Ansteuerung des Temperaturreglers verarbeitet. Bei der Datenverarbeitungseinheit handelt es sich beispielsweise um eine speicherprogrammierbare Steuerung, die Eingangs- und Ausgangskanäle sowie einen Speicher aufweist. Die Datenverarbeitungseinheit kann programmiert werden, um das gewünschte Regelverhalten der Thermostateinheit einzustellen. Zusätzlich ist mindestens ein Bewegungssensor vorgesehen der wenigstens zwei voneinander verschiedene Erfassungsfelder überwacht. Durch diese beiden verschiedenen Erfassungsfelder ist es möglich, im Raum anwesende Personen von Haustieren zu unterscheiden. Die verschiedenen Erfassungsfelder könnten beispielsweise so eingestellt werden, dass ein Erfassungsfeld nur niedrige/kleine Lebewesen erfasst, indem das Feld beispielsweise auf einen Erfassungsbereich bis 1 m Höhe über dem Boden des Raumes eingestellt wird. Das zweite Erfassungsfeld wird dann auf einen Bereich von ab 1 m Höhe über dem Boden des Raumes eingestellt. Menschliche Aktivität wird von der Datenverarbeitungseinheit dann nur festgestellt wenn Bewegung in beiden Erfassungsfeldern erkannt wird. Wird nur Bewegung in einem Erfassungsfeld erkannt, liegt keine Anwesenheit von Personen im Raum vor. Die Grenze zwischen den beiden Erfassungsfeldern kann selbstverständlich auch auf eine andere Art gestaltet werden. Die erfindungsgemäße Thermostateinheit führt eine Regelung der Raumtemperatur basierend auf wenigstens einem Sensorsignal aus. Bei diesem wenigstens einem Sensorsignal kann es sich um ein Signal eines Lichtsensors oder eines Bewegungssensors handeln.

Des Weiteren ist vorgesehen, dass die Datenverarbeitungseinheit eine Uhrzeit- und Kalenderfunktion sowie einen Speicher umfasst. In diesem Speicher können dann sowohl Sollwerte für die Temperaturregelung als auch Zeit-und Datumswerte abgelegt werden. Somit ist es möglich, die Temperaturregelung auch über einprogrammierte Termine zu beeinflussen. So können beispielsweise Urlaubszeiten abgespeichert werden, in denen andere, niedrigere Solltemperaturen ausgeregelt werden. Auch übliche Uhrzeiten für die Übergänge zwischen Tag und Nacht bzw. Aktivität oder Nichtaktivität von Personen im Raum können so abgespeichert werden. Durch die Uhrzeit- und Kalenderfunktion ist es der Thermostateinheit dann stets möglich, einen im Speicher abgelegten Sollwert zur Temperaturregelung anzulegen. Weiterhin können alle Sollwerte zur Temperaturregelung immer wieder bedarfsgemäß geändert werden.

In einer vorteilhaften Ausgestaltung ist vorgesehen, dass die Thermostateinheit ein Eingabeelement, insbesondere ein Stellrad aufweist. Dieses Stellrad ist zur manuellen Einstellung der Temperatur einsetzbar. Ist eine im Raum anwesende Person nicht zufrieden mit der vorliegenden Raumtemperatur, kann sie mithilfe des Stellrades, ohne sich mit der Programmierung der Thermostateinheit beschäftigen zu müssen, die Raumtemperatur direkt manuell abändern. Weiterhin ist es möglich durch das Stellrad die Sollwerte im Speicher der Datenverarbeitungseinheit abzuändern und damit die Regelungseigenschaften im Automatikbetrieb zu beeinflussen. Auch die Uhrzeit- und Datumswerte im Speicher der Datenverarbeitungseinheit können über das Stellrad benutzerfreundlich verändert werden. Auch ein Ausschalten der gesamten Thermostateinheit ist über das Stellrad möglich. Dies könnte beispielsweise über einen Schalter in einer Endlage des Stellrades realisiert werden, ohne die Erfindung auf diese Lösung zu beschränken. Dadurch ist der Vorteil gegeben, dass sich die Thermostateinheit auch von Personen, die mit den Details der Thermostateinheit nicht vertraut sind, jederzeit einfach ausschalten lässt. Weiterhin ist es möglich, die Empfindlichkeit mindestens eines der Sensoren über das Stellrad zu beeinflussen. Dies ermöglicht, dass beispielsweise der Lichtsensor an die Helligkeitsbedingungen seiner Einbaulage angepasst werden kann. Die Erfindung ist selbstverständlich nicht nur auf ein Stellrad als Eingabeelement beschränkt. Es können auch verschiedene andere Eingabeelemente wie Stellschieber, Drehschalter oder Stellhebel eingesetzt werden.

In einer weiteren bevorzugten Ausführungsform ist vorgesehen, dass die Thermostateinheit wenigstens ein Display und/oder wenigstens ein Tastenbedienelement aufweist. Ein Display ermöglicht die Anzeige der aktuellen Soll- und Ist-Temperatur. Weiterhin sind andere nützliche Informationen wie beispielsweise die Art des anliegenden Betriebsmodus oder Datum und Uhrzeit darstellbar. Auch können bei der Programmierung der Thermostateinheit die Parameter auf dem Display angezeigt werden. Die Aufgaben des Displays können ebenso durch Kontrolllampen, Leuchtdioden oder andere Anzeigeelemente realisiert werden.
Über ein oder mehrere Tastenbedienelemente wird gewährleistet, dass unterschiedliche Modi der Temperaturregelung durch einen einfachen Knopfdruck direkt ausgewählt werden können. Weiterhin können Sollwerte für die Temperatur oder Zeit-und Datumswerte über die Tastenbedienelemente in den Speicher der

Datenverarbeitungseinheit eingegeben werden. Die Eingaben können auch über Kipphebel, Wärmesensoren oder ein Touchpad, wie es beispielsweise bei Smartphones eingesetzt wird, erfolgen. Die Eingaben sind selbstverständlich auch in Kombination mit dem Stellrad möglich.

Des Weiteren ist vorgesehen, dass wenigstens ein Lichtsensor auf einer Oberseite des Gehäuses der Thermostateinheit vorgesehen ist ohne die Erfindung hierauf zu beschränken. Die Anordnung oben auf der Einheit ermöglicht eine optimale Erfassung von Licht, da sowohl Tageslicht als auch künstliches Licht von oben ausgesendet wird. Das Gehäuse kann so den Erfassungsbereich des Lichtsensors nicht verdecken.

Vorteilhafter Weise ist vorgesehen, dass eine automatische Regelung der Thermostateinheit durch die Datenverarbeitungseinheit auf Basis der Signale mindestens eines Lichtsensors vorgesehen ist. Die vom Lichtsensor erkannten Helligkeiten werden von der Datenverarbeitungseinheit in Informationen umgearbeitet, die in eine Aussage zur Anwesenheit von aktiven Personen im Raum einwirken. So kann beispielsweise beim Registrieren höherer Helligkeit in der Nacht darauf geschlossen werden, dass künstliches Licht angeschaltet wurde. Dies gibt wiederum Hinweis auf die Aktivität von Personen im Raum und bewirkt die Anhebung der Temperatur.

Des Weiteren ist in dem Vorschlag vorteilhafter Weise vorgesehen, dass die Signale des mindestens einen Lichtsensors mit im Speicher hinterlegten Datensätzen aus Licht- und Dunkelphasen kombiniert werden. Es ist möglich, im Speicher der Thermostateinheit Datensätze mit Beginn und Ende der Tageslichtdauer abhängig von Datum und Jahreszeit abzulegen. Durch die Kenntnis, zu welchen Zeiten Tageslicht vorhanden ist, und somit vom Lichtsensor registrierte Helligkeit nicht zwingend Ursache von Aktivität von Personen im Raum sein muss, kann die Genauigkeit zum Erkennen von aktiven Personen im Raum weiter verbessert werden.

Des Weiteren ist vorgesehen, dass die Thermostateinheit über einen Anschluss direkt an einem Heizkörper anbringbar ist. Es ist somit eine sehr einfache Montage der Thermostateinheit gewährleistet. Durch die Verwendung von genormten Anschlüssen kann die Thermostateinheit in gleicher Art wie ein gewöhnlicher, manueller Drehthermostat angebracht werden, bspw. über Schiebemuffen, Unterwurfmuffen oder dergleichen. Spezielles Fachwissen ist bei der Anbringung der Thermostateinheit also nicht erforderlich.

Bei einer bevorzugten Ausgestaltung des Vorschlags ist vorgesehen, dass Lage und Ausrichtung der Thermostateinheit und/oder des wenigstes einen Sensors im Raum bezogen auf den Anschluss am Heizkörper einstellbar sind/ist. Vorteil dieser Eigenschaft ist der, dass je nach Einbaulage am Heizkörper die Erfassungsbereiche der Sensoren im Raum individuell und optimal ausgerichtet werden können. Dies ist wichtig für eine hohe Genauigkeit beim Erkennen von aktiven Personen im Raum.

Des Weiteren ist vorgesehen, dass die Lage eines oder beider Erfassungsfelder am Bewegungssensor einstellbar ist. Dieses Merkmal dient dazu die Genauigkeit beim Erkennen von Personen im Raum zu optimieren. Durch eine Einstellbarkeit der Erfassungsfelder wird eine optimale Trennung zwischen dem Erkennen von Personen und dem Erkennen von bspw. Haustieren gewährleistet.

Bei einer bevorzugten Ausgestaltung des Vorschlags ist vorgesehen, dass die Erfassungsfelder durch eine Trennebene getrennt sind und die Erfassungsbereiche je einen Erfassungswinkel relativ zur Trennebene aufweisen. Die Trennebene schließt in dieser Ausführungsform aus, dass sich die Erfassungsbereiche durchdringen oder überlappen. Die Trennebene ist in einer bevorzugten Ausführungsform relativ zum Gehäuse im Wesentlichen horizontal oder vertikal ausgerichtet vorgesehen. Für eine genaue Unterscheidung zwischen der Anwesenheit von Personen und der Anwesenheit von Haustieren hat sich eine im Raum horizontal ausgerichtete Trennebene zwischen den Erfassungsfeldern als besonders günstig herausgestellt. Durch eine Anordnung der Trennebene horizontal oder vertikal zum Gehäuse der Thermostateinheit kann die gesamte Thermostateinheit in ihrer Einbaulage variiert werden, was wiederum die Montage in verschiedenen Einbausituationen oder bei verschiedenen Heizkörperausführungen erleichtert. Die über die Erfassungswinkel eindeutig definierten und einstellbaren Erfassungsbereiche liefern so unabhängige Informationen über Bewegungen im Raum. Die Erfassungswinkel der Erfassungsbereiche liegen dabei zwischen 0° und 179°. In der Praxis haben sich allerdings insbesondere Erfassungswinkel zwischen 10° und 145°, bevorzugt Winkel zwischen 30° und 90° als günstig zur genauen Erkennung von aktiven Personen im Raum herausgestellt. Selbstverständlich sind erfindungsgemäß auch andere Erfassungswinkel und Lagen der Trennebene möglich.

Eine weitere Ausführungsform sieht vor, dass sich die Erfassungsfelder auch überlappen können. Bewegungen, die in dem entstehenden Überlappungsbereich stattfinden werden dann von beiden Erkennungsfeldern wahrgenommen.

Geschickter Weise ist vorgesehen, dass der Bewegungssensor als Infrarotsensor, Radarsensor oder Ultraschallsensor ausgebildet ist. Darüber hinaus ist es natürlich auch möglich, andersartig geeignete Bewegungssensoren in der erfindungsgemäßen Thermostateinheit einzusetzen.

Des Weiteren ist vorgesehen, dass zur automatischen Temperaturregelung wenigstens ein, insbesondere zwei, bevorzugt drei unterschiedliche Modi vorgesehen sind. Unter Modus ist hier ein separater Programmbereich der Datenverarbeitungseinheit zu verstehen, in dem jeweils eigene Sollwerte für die Temperaturregelung hinterlegt sind. Beispielsweise könnte ein solcher Modus für die Regelung der Raumtemperatur bei Anwesenheit von Personen und ein anderer Modus zur Regelung der Raumtemperatur bei Abwesenheit von Personen eingenommen werden. Die Strukturierung der Temperaturregelung in unterschiedliche Modi bringt den Vorteil, dass die Programmierung einfacher und leichter verständlich ist. Weiterhin ist das manuelle Eingreifen in die automatische Regelung durch das Vorhandensein unterschiedlicher Modi einfacher, so dass beispielsweise per Knopfdruck sofort ein anderer Satz von Sollwerten zur Temperaturregelung ausgewählt werden kann.

Des Weiteren ist günstiger Weise vorgesehen, dass wahlweise ein Signal des Lichtsensors, des Bewegungssensors, der Tastenbedienelemente, des Stellrades und/oder der Zeit- und Kalenderfunktion als Stellglieder für den ausgewählten Modus vorgesehen sind. Diese Stellglieder sind hier als Auslöser oder Trigger zum Wechsel in einen anderen Modus zu betrachten. Bei der erfindungsgemäßen Thermostateinheit kann also sowohl ein manuelles Signal, wie beispielsweise der Druck auf eine Taste, als auch ein automatisch generiertes Signal, wie beispielsweise das Erkennen einer sich bewegenden Person im Raum durch einen Bewegungssensor einen Wechsel des Modus und dadurch des Regelverhaltens auslösen.

Geschickter Weise ist vorgesehen, dass ein Temperatursensor zur Messung der Vorlauftemperatur und ein Temperatursensor zur Messung der Rücklauftemperatur vorgesehen sind und die Datenverarbeitungseinheit aus den Messwerten dieser Temperatursensoren in Kombination mit dem Messwert des Temperaturfühlers, der die Raumtemperatur misst, und einer Zeitinformation, die von der Uhrzeit- und Kalenderfunktion bereitgestellt wird, die Wärmemenge berechnet, die an dem Heizkörper, dessen Temperatur die Thermostateinheit regelt, umgesetzt wird. In dieser Ausführungsform sind zwei weitere Temperatursensoren vorgesehen, die die Temperatur des Heizmediums am Vorlauf sowie am Rücklauf des Heizkörpers messen, welcher von der Thermostateinheit geregelt wird. Die Differenz zwischen Vorlauf- und Rücklauftemperatur sagt aus, in welchem Maß das Heizmedium beim Durchlaufen des Heizkörpers abgekühlt ist. In Kombination mit der Information des in der Thermostateinheit verbauten Temperaturfühlers, welcher die aktuelle Raumtemperatur misst, ist eine Berechnung der am Heizkörper umgesetzten Wärmemenge gemäß der europäischen Norm EN 834 möglich. Ebenfalls zur Erfindung gehörend ist das Vorsehen eines zusätzlichen Messelementes für den Volumenstrom durch den Heizkörper, beispielsweise in Form eines Flügelrades oder eines Venturi-Rohres.
Besonders vorteilhaft an dieser Ausführungsform ist die Funktionsvereinigung zweier Geräte innerhalb der Thermostateinheit: zum einen regelt die Thermostateinheit komfortabel und automatisch die Raumtemperatur. Zum anderen ermittelt die Thermostateinheit gleichzeitig die umgesetzte Wärmemenge, die für die Berechnung der anfallenden Heizkosten benötigt wird. Aktuell wird diese Berechnung der Wärmemenge meist von separaten Geräten durchgeführt, was einen erhöhten Aufwand, auch in finanzieller Hinsicht, bedeutet. Mit einer Integration einer Möglichkeit zur Wärmemengenmessung in einer Thermostateinheit kann ein zusätzliches Gerät zur Feststellung der verbrauchten Wärmemenge eingespart werden. Eine Integration der Wärmemengenmessung in die Thermostateinheit hat weitere Vorteile. Separate Geräte zur Messung der Wärmemenge haben oft das Problem, dass sie bei niedrigen Vorlauftemperaturen oder bei geringen Differenzen zwischen Vor- und Nachlauftemperatur nicht erkennen können, ob der entsprechende Heizkörper überhaupt von Heizmedium durchströmt wird oder nicht. Es kann daher bei separaten Geräten zur Messung der Wärmemenge vorkommen, dass eine umgesetzte Wärmemenge berechnet wird, obwohl das Ventil des Heizkörpers komplett geschlossen ist und dieser gar nicht von Heizmedium durchströmt wird. Eine erfindungsgemäße Thermostateinheit erkennt die Ventilstellung des Heizkörpers und hat somit jederzeit eine verlässliche Information zur Verfügung, ob der Heizkörper von Heizmedium durchströmt wird oder nicht.

Bei einer bevorzugten Ausgestaltung der Erfindung ist vorgesehen, dass der Temperatursensor zur Messung der Vorlauftemperatur in den Anschluss der Thermostateinheit integriert ist und der Temperatursensor zur Messung der Rücklauftemperatur sich außerhalb der Thermostateinheit befindet und über einen Sensoranschluss mit der Thermostateinheit verbunden ist und dieser Sensoranschluss als Kabelverbindung oder Drahtlosverbindung ausgeführt ist. In dieser Ausführungsform der Erfindung ist ein Sensor zur Messung der Vorlauftemperatur in der Thermostateinheit bzw. im Anschluss der Thermostateinheit an den Heizkörper integriert. Dieser Sensor ist innerhalb der Thermostateinheit mit der Datenverarbeitungseinheit zur Informationsübertragung verbunden. Ein weiterer Sensor befindet sich außerhalb der Thermostateinheit und ist am Rücklauf des Heizkörpers zur Messung der Rücklauftemperatur angebracht. Dieser Sensor zur Messung der Rücklauftemperatur ist über einen Sensoranschluss mit der Thermostateinheit zur Informationsübertragung verbunden. Der Sensoranschluss kann dabei als Kabelverbindung oder aber auch als Funkverbindung ausgebildet sein.

Des Weiteren ist günstiger Weise vorgesehen, dass ein Kontaktsensor im Anschluss vorgesehen ist, der ermittelt, ob die Thermostateinheit an einem Ventil angeschlossen ist. In dieser Ausführung der Erfindung ist ein Kontaktsensor vorgesehen, der erkennen kann, ob die Thermostateinheit tatsächlich an einem Ventil eines Heizkörpers angeschlossen ist. Bei einer Verwendung der Thermostateinheit als Wärmemengenmesser, wie es weiter oben beschrieben wurde, wäre es möglich, die Thermostateinheit vom Heizkörper zu entfernen um die umgesetzte Wärmemenge absichtlich nicht zu erfassen. Im Fall der Abrechnung der Heizkosten anhand der umgesetzten und von der Thermostateinheit ermittelten Wärmemenge könnten so die anfallenden Heizkosten manipuliert werden. Um eine derartige Manipulation der Heizkosten entgegenzuwirken, ist der Kontaktsensor in der Thermostateinheit vorgesehen. Für den Fall, dass dieser Kontaktsensor erkennt, dass er nicht an einem Heizkörperventil angeschlossen ist wird für die Berechnung der umgesetzten Wärmemenge der maximal mögliche Volumenstrom durch das Heizkörperventil angenommen. Die Zusammenhänge zwischen den Signalen des Kontaktsensors und der daraus abzuleitenden Annahmen und Aktionen sind als Programm im Speicher der Datenverarbeitungseinheit der Thermostateinheit hinterlegt. Somit wird bei einer absichtlichen Demontage der Thermostateinheit vom Heizkörper nicht gar kein Volumenstrom und damit gar keine Wärmemenge erfasst sondern es wird der maximal mögliche Volumenstrom und damit die maximal mögliche Wärmemenge von der Thermostateinheit erfasst und aufgezeichnet. Ein Nutzer, der die Thermostateinheit vom Heizkörper demontiert um dadurch Heizkosten einzusparen erreicht damit genau das Gegenteil: durch die Demontage der Thermostateinheit vom Heizkörper wird automatisch die maximal mögliche Wärmemenge aufgezeichnet, was zu keiner Einsparung bei den Heizkosten führt sondern im Gegenteil zu höheren Heizkosten als im Normalbetrieb führen dürfte. Das Vorsehen eines Kontaktsensors, der erkennt ob die Thermostateinheit an einem Heizkörperventil angeschlossen ist verhindert somit effektiv und einfach eine Manipulation der Heizkostenabrechnung durch Bewohner der beheizten Räume.

Vorteilhafter Weise ist vorgesehen, dass ein Sende- und Empfangsmodul vorgesehen ist, welches Datentransfer der Thermostateinheit mit einem Gateway und/oder mit dem Internet ermöglicht und/oder das Sende- und Empfangsmodul eine Fernbedienung der Thermostateinheit durch mindestens eine portable Funkfernbedienung und/oder durch den Gateway und/oder über das Internet ermöglicht. In dieser Ausführungsform ist in der Thermostateinheit oder direkt an der Thermostateinheit angebracht, ein Sende- und Empfangsmodul vorgesehen, welches Kommunikation und Datentransfer der Thermostateinheit mit anderen Geräten ermöglicht. Bei diesen anderen Geräten kann es sich beispielsweise um einen Gateway handeln, welcher zur Steuerung und Regelung einer oder mehrerer Thermostateinheiten, auch verschiedener Bauart, vorgesehen ist. Dieser Gateway kann dabei auch mit dem Internet verbunden sein, wobei dann über den Gateway eine Kommunikation der Thermostateinheit mit dem Internet möglich ist. Es ist allerdings auch möglich, dass das Sende- und Empfangsmodul der Thermostateinheit so ausgeführt ist, dass es ohne Gateway direkt mit dem Internet kommuniziert. Dies könnte beispielsweise über eine Mobilfunkverbindung erfolgen. Weiterhin bietet das Vorsehen eines Sende- und Empfangsmoduls in der Thermostateinheit die Möglichkeit der Fernbedienung der Thermostateinheit. Eine derartige Fernbedienung kann beispielsweise direkt über eine oder mehrere Funkfernbedienungen erfolgen. Solche Funkfernbedienungen, die ähnlich der Funkfernbedienungen für Fernsehgeräte gestaltet sein können, ermöglichen die Einflussnahme auf die Thermostateinheit ohne direkten Zugang zu der Thermostateinheit haben zu müssen. Dies erhöht deutlich den Komfort bei der Bedienung der Thermostateinheit, gerade wenn die Thermostateinheit an schwer zugänglichen Heizkörpern angebracht ist. Weiterhin ist eine Fernbedienung der Thermostateinheit mithilfe des Sende- und Empfangsmoduls auch über einen Gateway möglich. Der Gateway kann dabei so gestaltet sein, dass eine Software eine zentrale Regelung und Überwachung mehrerer Thermostateinheit übernimmt. Der Bediener oder Hausbesitzer kann dann über diese zentrale Software und den Gateway von einer Stelle aus alle Thermostateinheit komfortabel bedienen, einstellen und überwachen. Darüber hinaus ist durch das Sende- und Empfangsmodul eine Fernbedienung der Thermostateinheit auch vom Internet aus möglich. Diese Fernbedienung der Thermostateinheit kann entweder vom Internet aus über den Gateway, oder auch direkt erfolgen. Als Eingabegeräte für eine Fernbedienung der Thermostateinheit über das Internet sind alle möglichen Datenverarbeitungsgeräte denkbar. So kann die Fernbedienung über einen am Internet angeschlossenen PC oder ein über eine Funkverbindung mit dem Internet verbundenes Notebook erfolgen. Weiterhin sind selbstverständlich auch mobile, internetfähige Geräte zur Fernbedienung der Thermostateinheit denkbar, wie beispielsweise Smartphones. Die Fernbedienung kann über entsprechende Software oder Apps erfolgen. Besonders komfortabel und benutzerfreundlich sind dabei Programme oder Apps mit einer grafischen Benutzeroberfläche, die beispielsweise ähnlich der Tastenbedienelemente, die direkt an der Thermostateinheit angebracht sind, gestaltet sein können.

Eine weitere Ausführungsform sieht vor, dass das Sende- und Empfangsmodul Daten zur Wärmemenge, die an dem Heizkörper umgesetzt wird, welcher von der Thermostateinheit geregelt wird, übermittelt, wobei diese Daten durch den Gateway und/oder durch einen externen Dienstleister, der über eine Datenverbindung, insbesondere das Internet, mit dem Gateway oder direkt mit der Thermostateinheit verbunden ist, ausgewertet werden. In dieser Ausführung wird die Wärmemenge, die an dem Heizkörper umgesetzt wird, an dem die Thermostateinheit befestigt ist, nicht nur gespeichert sondern auch über eine Datenverbindung an andere Geräte übermittelt. Diese Übermittlung erfolgt dabei durch das Sende- und Empfangsmodul der Thermostateinheit. Bei einer Übermittlung der umgesetzten Wärmemenge zum Gateway besteht dort die Möglichkeit die Wärmemengen mehrerer Heizkörper miteinander zu vergleichen oder zu addieren. Somit kann in komfortabler Weise die Umsetzung von Wärme und damit der Energieverbrauch innerhalb einer Wohneinheit oder eines Hauses ausgewertet werden. Darüber hinaus ist es möglich die erfassten Daten zu den Wärmemengen über eine Datenverbindung direkt einem externen Dienstleister zur Verfügung zu stellen, der dann den Energieverbrauch ermittelt und eine Rechnung für die fälligen Heizkosten erstellt. Die Datenverbindung zwischen Thermostateinheit bzw. dem Gateway auf der einen Seite und dem externen Dienstleister auf der anderen Seite kann dabei über verschiedene Datenverbindungen erfolgen. Derartige Datenverbindungen können beispielsweise das Internet oder auch direkte Netzwerkanbindungen wie LAN, WLAN, Ethernet oder Ähnliches sein. Eine direkte Verbindung der Thermostateinheit, welche auch die umgesetzte Wärmemenge erfasst, mit einem externen Dienstleister erspart das Ablesen der umgesetzten Wärmemenge vor Ort. Dieses Einsparen eines Besuchs eines Mitarbeiters, der in allen Wohneinheiten die umgesetzte Wärmemenge abliest, erspart dem Dienstleister Kosten für den im Außendienst tätigen Mitarbeiter und beseitigt gleichzeitig unangenehme Termine für die Bewohner, die durch die erfindungsgemäße Lösung nicht zu den vereinbarten Ablesezeiten durch einen Mitarbeiter des Dienstleisters zuhause sein und den Mitarbeiter in ihre Wohnung lassen müssen.

Die Erfindung umfasst zusätzlich ein Verfahren zur automatischen Regelung der Raumtemperatur mit einer Thermostateinheit entsprechend einer der bisher dargestellten Ausführungsformen. Dabei sind mindestens drei Modi und mindestens drei Stellglieder vorgesehen, wobei die Stellglieder gleichzeitig oder wechselweise Einfluss auf die Auswahl des ausgeführten Modus nehmen. Das erfindungsgemäße Verfahren umfasst dabei die Schritte:
I) Manuelle Auswahl des zuerst auszuführenden Modus
   Der zuerst auszuführende Modus wird hierbei über ein Bedienelement, wie beispielsweise ein Stellrad oder ein Tastenbedienelement manuell ausgewählt.
II) Temperaturregelung nach dem Sollwert des auszuführenden Modus
   Die Thermostateinheit beginnt die Regelung der Raumtemperatur in dem zuvor manuell ausgewählten Modus und verwendet zur Regelung die dort hinterlegten Sollwerte.
III) Automatische Auswahl und/oder automatischer Wechsel des Modus in Abhängigkeit von den Stellgliedern und Temperaturregelung nach dem Sollwert des jeweils ausgewählten Modus.
   Während des Ausführens eines Modus kann jederzeit durch die Aktivierung eines Stellgliedes der Wechsel in einen anderen Modus ausgelöst werden.

Bei einer bevorzugten Ausgestaltung der Erfindung ist vorgesehen, dass als Stellglieder manuelles Stellen, automatisch erzeugte Informationen über eine Anwesenheit von Personen im Raum und zeitabhängige und vorprogrammierbare Informationen, die in Abhängigkeit von Uhr- und/oder Kalenderfunktion wirksam werden, vorgesehen sind.
Manuelles Stellen ist hier als jede Art der Eingabe zu sehen, die nicht automatisch ausgelöst wird. Eine solche Eingabe könnte beispielsweise durch das Drücken einer Taste oder das Betätigen eines Drehreglers erfolgen. Durch das manuelle Stellen wird in jedem Betriebszustand der Thermostateinheit sofort ein Wechsel des Modus ausgelöst.
Ein weiteres Stellglied, zur Auswahl des Modus des Regelungsverfahrens, ist eine automatisch generierte Information die aussagt, ob sich Personen im Raum befinden. Diese Information wird im erfindungsgemäßen Verfahren aus einer Mehrzahl an Eingangssignalen erzeugt. Einfluss nehmen hier die Signale der Lichtsensoren sowie der Bewegungssensoren, die von der Datenverarbeitungseinheit gemäß einem dort hinterlegten Programm verarbeitet werden.
Ein drittes Stellglied wird durch Informationen aus der Uhr- und/oder Kalenderfunktion der Datenverarbeitungseinheit gebildet. Dabei werden ständig im Speicher einprogrammierte Ereignisse, wie beispielsweise eine Woche Betriebsurlaub, mit der aktuellen Uhrzeit und dem aktuellen Datum verglichen. Je nach dem, ob vorprogrammierte Ereignisse und die aktuelle Uhrzeit zusammentreffen oder nicht wird eine Information erzeugt, die als Stellglied einen Wechsel des Betriebsmodus auslöst.

Vorteilhafter Weise ist vorgesehen, dass ein erster Modus zur Regelung einer Temperatur bei Anwesenheit von Personen im Raum vorgesehen ist, wobei während der Aktivität des Modus kontinuierlich Anwesenheit von Personen im Raum geprüft wird, wobei die Anwesenheit aus Ausgaben des Lichtsensors und/oder des Bewegungssensors, welcher mindestens zwei Erfassungsbereiche überwacht abgeleitet wird. Während der Ausführung dieses ersten Modus werden kontinuierlich Signale der Licht- und Bewegungssensoren abgefragt. Ermittelt die Datenverarbeitungseinheit aus diesen abgefragten Signalen die Information, dass Personen im Raum anwesend sind, wird der Modus beibehalten. Erfolgt längere Zeit keine Information über die Anwesenheit von Personen wird die Raumtemperatur automatisch abgesenkt. Möglich wäre hier beispielsweise, dass nach 30 Minuten, in denen sich keine Personen im Raum befinden, die Raumtemperatur zunächst um 2 °C abgesenkt wird. Wenn sich nach einem weiteren definierte Zeitraum, bspw. 60 Minuten, immer noch keine Personen im Raum befinden, erfolgt ein Wechsel in einen anderen Modus. Da die Anwesenheit von Personen im Raum kontinuierlich geprüft wird, erfolgt bei Feststellung erneuter Aktivität von Personen im Raum eine Rückkehr in den ersten Modus. Der erste Modus wird bspw. zur Regelung einer komfortablen Raumtemperatur bei Anwesenheit von Personen verwendet.

Des Weiteren ist vorgesehen, dass während der Aktivität des ersten Modus kontinuierlich vorprogrammierte Daten mit den Ausgaben der Uhr- und Kalenderfunktion verglichen werden. Zusätzlich zu den über die Sensoren abgefragten Informationen über Anwesenheit von Personen im Raum, wird im ersten Modus auf im Speicher der Datenverarbeitungseinheit abgelegte Informationen zurückgegriffen. So kann hier eine Zeitspanne abgespeichert sein, in der anwesende Personen normalerweise schlafen. Während dieser Schlafenszeit empfiehlt es sich einen anderen Modus auszuführen. Diese zusätzlichen Informationen aus dem Speicher kommen beispielsweise dann zum Tragen, wenn sich nachts, d.h. zu Zeiten in denen Schlafenszeit programmiert ist, keine Aktivität von Personen im Raum festgestellt wird. Beide Informationen zusammen führen dann zum Wechsel in einen Modus, der Sollwerte zur Temperaturregelung für anwesende aber inaktive Personen vorgibt. Andererseits wird ohne die Information aus dem Speicher, dass aktuell die vorprogrammierte Schlafenszeit vorliegt, ein anderer Modus eingenommen. Dies könnte beispielsweise ein Energiesparmodus sein, bei dem die Temperatur tiefer als zum Schlafen abgesenkt wird.

Vorteilhafter Weise ist vorgesehen, dass ein zweiter Modus zur Regelung der Temperatur bei Abwesenheit von Personen vorgesehen ist, wobei während der Aktivität des Modus kontinuierlich Anwesenheit von Personen im Raum geprüft wird, wobei die Anwesenheit aus Ausgaben des Lichtsensors und/oder des Bewegungssensors, welcher mindestens zwei Erfassungsbereiche überwacht abgeleitet wird. Dieser zweite Modus wird eingenommen, wenn sich keine Personen im Raum befinden und wenn über die Uhr- und Kalenderfunktion keine Informationen vorliegen, dass aktuell Schlafenszeit ist. Dieser zweite Modus reduziert die Raumtemperatur dann beispielsweise auf 12 °C. Die Einsparung von Heizkosten ist in diesem Modus am größten. Gemäß der vorliegenden Erfindung wird dieser Modus automatisch eingenommen, wenn beispielsweise tagsüber längere Zeit keine Personen im Raum sind. Auch im zweiten Modus führt das erneute Feststellen der Anwesenheit von Personen im Raum dazu, dass sofort auf einen anderen Modus umgeschaltet wird. Sinnvollerweise wäre das während der Aktivität des zweiten Modus ein Wechsel in den ersten Modus, der dann wieder eine komfortable Raumtemperatur herstellt.

Vorteilhafter Weise ist vorgesehen, dass ein dritter Modus bei anwesenden, nicht aktiven Personen vorgesehen ist und wobei während der Aktivität des Modus kontinuierlich Anwesenheit von Personen im Raum geprüft wird, wobei die Anwesenheit aus Ausgaben des Lichtsensors und/oder des Bewegungssensors, welcher mindestens zwei Erfassungsbereiche überwacht abgeleitet wird. Dieser dritte Modus enthält Sollwerte zur Temperaturregelung für nicht aktive anwesende Personen. Darunter sind beispielsweise schlafende Personen zu verstehen. Die Signale der Licht- und/oder Bewegungssensoren führen in diesem Fall zu der Information, dass Personen nicht abwesend, sondern anwesend aber nicht aktiv sind. Dies könnte beispielsweise dann der Fall sein, wenn ein Erfassungsbereich des Bewegungssensors, der den oberen Bereich des Raumes abdeckt, keine Aktivitäten mehr meldet. Der zweite Erfassungsbereich des Bewegungssensors, der einen unteren Bereich im Raum erfasst meldet aber noch hin und wieder Aktivität. Die Sollwerte für die Temperaturregelung im dritten Modus sind etwas niedriger als im ersten Modus. Beispielsweise könnte 30 Minuten nach dem letzten Erfassen von aktiven Personen die Temperatur um 2 °C gesenkt werden, nach 60 Minuten könnte dann auf eine Solltemperatur von 16 °C eingeregelt werden.

Bei einer bevorzugten Ausgestaltung des Vorschlags ist vorgesehen, dass während der Aktivität des dritten Modus kontinuierlich vorprogrammierte Daten mit den Ausgaben der Uhr- und Kalenderfunktion verglichen werden. Wie beim ersten Modus wird beim dritten Modus neben den Informationen der Sensoren auch auf im Speicher hinterlegte Informationen zurückgegriffen. So wird kontinuierlich geprüft, ob zum aktuellen Zeitpunkt eine Information im Speicher abgelegt ist. Eine solche Information im Speicher könnte beispielsweise eine Zeitspanne sein, die als Schlafenszeit vorprogrammiert ist. Während dieser Schlafenszeit wird der dritte Modus beibehalten. Wird dann am Morgen eine andere Information erzeugt, beispielsweise dass nun keine Schlafenszeit mehr vorliegt, wird in einen anderen Modus gewechselt. So lässt sich realisieren, dass morgens ab einer bestimmten Uhrzeit die Raumtemperatur wieder erhöht wird, um komfortable Bedingungen beim Aufstehen zu schaffen.

Geschickter Weise ist vorgesehen, dass in jedem Modus die Datenverarbeitungseinheit in definierten zeitlichen Abständen eine Eingangsinformation der Stellglieder abfragt und bei Veränderung der Eingangsinformation ein Wechsel des Modus durchgeführt wird. Um eine bedarfsgerechte Temperaturregelung zu ermöglichen werden alle Stellglieder, beispielsweise die Sensoren und die Eingabeelemente wie Tasten oder Stellrad immer wieder abgefragt. So wird erreicht, dass immer aktuelle Eingangsinformationen in das Regelungsverfahren einfließen und jederzeit der passende Modus eingenommen wird.

In einer vorteilhaften Ausgestaltung ist vorgesehen, dass Die zeitlichen Abstände der Abfragen der Eingangsinformation zwischen 0,01 Sekunden und 5 Minuten, insbesondere zwischen 0,02 Sekunden und 2 Minuten, bevorzugt zwischen 0,1 und 30 Sekunden liegen. Diese Abfrageintervalle können je nach Modus auch individuell unterschiedlich eingestellt werden. Im zweiten Modus, der die Temperatur bei Abwesenheit von Personen regelt und das größte Einsparpotenzial an Heizkosten beinhaltet, wäre es möglich auch das Abfrageintervall länger zu gestalten. Dadurch könnte die Lebensdauer der Batterie der Thermostateinheit verlängert werden. In den anderen Modi werden vorteilhafterweise sehr kurze Abfrageintervalle verwendet, um jegliche Veränderung im Raum direkt feststellen zu können.

Des Weiteren ist vorgesehen, dass durch die Tastenbedienelemente und/oder das Stellrad eine manuelle Auswahl der Modi und/oder Stellglieder durchgeführt wird. Es ist erfindungsgemäß immer möglich, während der automatischen Temperaturregelung des Verfahrens manuell einzugreifen. So können beispielsweise über Knopfdruck die Modi direkt angewählt und umgeschaltet werden. Beim Verlassen des Hauses auf dem Weg in den Urlaub könnte so direkt der am meisten Energie einsparende zweite Modus über Tastendruck ausgewählt werden.

Bei einer bevorzugten Ausgestaltung des Vorschlags ist vorgesehen, dass durch Stellglieder, insbesondere durch das Stellrad das Verfahren/die Thermostateinheit abgeschaltet wird. Dadurch ist gewährleistet, dass der gesamte Regelungsprozess über einen einfachen manuellen Eingriff jederzeit beendet werden kann.

Des Weiteren ist vorgesehen, dass die Sollwerte für Zeitintervalle und Temperaturen einstellbar sind. Durch diese Einstellbarkeit ist jederzeit eine Anpassung der Temperaturregelung an neue Bedürfnisse oder Anforderungen möglich. Gerade für den Fall, dass ein Raum von wechselnden Personen genutzt wird, ist dies nützlich, da das Temperaturempfinden verschiedener Personen oft stark unterschiedlich ausgeprägt ist. Weiterhin lassen sich auch die Zeitintervalle einstellen, beispielsweise die Zeitspanne für die Schlafenszeit. Auch hier gibt es sehr unterschiedliche Gewohnheiten bei verschiedenen Personen die mit der Erfindung einfach berücksichtigt werden können.

Geschickter Weise ist vorgesehen, dass als weiteres Stellglied ein Fernbedienungsgerät vorgesehen ist, das mindestens zwei Zustände annehmen kann und dessen Zustand, insbesondere einer der Zustände Manuell oder Auto, vom Bediener bestimmt wird, wobei das Fernbedienungsgerät im Zustand Manuell zumindest einen Wechsel der Modi, eine Änderung von im Speicher hinterlegten Solltemperaturen und/oder der Aufstehzeit sowie ein Ein- und Ausschalten des Bewegungssensors ermöglicht und wobei das Fernbedienungsgerät im Zustand Auto eine Änderung von im Speicher hinterlegten Solltemperaturen und/oder der Schaltzeiten für den Komfortmodus und den Eco-Modus sowie ein Ein- und Ausschalten des Bewegungssensors ermöglicht und ein Zugriff des Stellgliedes, verkörpert durch das Fernbedienungsgerät auf die Thermostateinheit jederzeit möglich ist und dieser Zugriff in der Bearbeitungshierarchie gleichwertig oder eines Stufe niedriger als der Zugriff des Stellgliedes, verkörpert durch die manuellen Eingabeelemente Stellrad oder Tastenbedienelement(e) ist.
In dieser Ausführungsform ist neben den mindestens drei bereits beschriebenen Stellgliedern ein weiteres Stellglied vorhanden, welches durch einen Fernbedienungsgerät gebildet wird. Auch dieses zusätzliche Stellglied nimmt während des Verfahrens zur automatischen Regelung der Raumtemperatur durch die Thermostateinheit Einfluss auf Wahl und Wechsel des gerade vorherrschenden Modus. Eine Beeinflussung der Auswahl des Modus durch das zusätzliche Stellglied kann dabei jederzeit erfolgen. In der Bearbeitungshierarchie ist das zusätzliche Stellglied, welches durch das Fernbedienungsgerät verkörpert wird auf der gleichen Stufe oder eine Stufe niedriger angeordnet wie das Stellglied, welches durch die manuellen Eingabeelemente, die an der Thermostateinheit angebracht sind, verkörpert wird. Das bedeutet, dass Eingaben über das Fernbedienungsgerät und damit über das zusätzliche Stellglied getätigt werden, stets direkten Einfluss auf die Auswahl des anliegenden Modus haben. Die Auswahl eines Modus über das Fernbedienungsgerät wird im Regelungsverfahren somit als übergeordneter Befehl verarbeitet, der über der automatischen Auswahl eines Modus nach den anderen Stellgliedern wie beispielsweise der Uhr- und Kalenderfunktion liegt. Zur Erläuterung sei folgender Beispielsfall betrachtet: Die Bewohner sind auf Reisen, der Urlaub ist auch in der Uhr- und Kalenderfunktion abgespeichert und soll zwei Wochen dauern. Die automatische Temperaturregelung wird in diesem Fall von dem Stellglied beeinflusst, welches durch die Uhr- und Kalenderfunktion gebildet wird. Dieses Stellglied aktiviert den Modus mit der größten Temperaturabsenkung, da die Bewohner nicht zuhause sind und auch nicht zu erwarten ist, dass sie nachhause kommen. Das Stellglied, welches durch die Sensor Informationen zu anwesenden Personen im Raum gebildet wird, wird ebenfalls nach einer gewissen Zeit den Modus mit der größten Temperaturabsenkung auslösen, da ja keine Anwesenheit der Bewohner festgestellt werden kann. Falls die Bewohner aufgrund schlechten Wetters ihren Urlaub bereits nach einer Woche abbrechen und auf dem Rückweg über das Fernbedienungsgerät die Aktivierung des Modus auslösen, welcher die Temperatur auf eine angenehme Raumtemperatur regelt, dann wird aufgrund der höheren Stufe des zusätzliche Stellgliedes (Fernbedienungsgerät) sofort der Modus mit der komfortablen Raumtemperatur aktiviert und die Stellsignale der automatische Stellglieder werden ignoriert. Es ist also jederzeit möglich, über das zusätzliche Stellglied, verkörpert durch das Fernbedienungsgerät, unabhängig von den anderen Stellgliedern einen Wechsel des Modus der Temperaturregelung herbeizuführen. Hierarchisch oberhalb des Fernbedienungsgerätes sind nur die direkt an der Thermostateinheit angebrachten Bedienelemente angeordnet. So ist sichergestellt, dass immer eine möglicherweise im Raum anwesende Person den hierarchisch höchsten Einfluss auf die Temperaturregelung in eben diesem Raum hat. Das zusätzliche Stellglied, gebildet durch ein Fernbedienungsgerät, kann dabei mindestens zwei Zustände annehmen. Besonders günstig haben sich dabei die zwei Zustände Manuell und Auto erwiesen. Zur Erfindung gehörend sind allerdings auch weitere Zustände möglich. Der Zustand Manuell des Fernbedienungsgerätes und damit auch des zusätzlichen Stellgliedes ermöglicht dabei verschiedene Aktionen zur Beeinflussung des Temperaturregelungsverfahrens. Zum einen kann im Zustand Manuell ein direkter Wechsel der unterschiedlichen Modi herbeigeführt werden. Bei diesem direkten Wechsel der Modi wird dann bei der Regelung der Temperatur auf die bereits im Speicher hinterlegten Sollwerte zurückgegriffen. Darüber hinaus ist auch eine Veränderung dieser im Speicher hinterlegten Solltemperaturen für die einzelnen Modi im Zustand Manuell möglich. Weiterhin besteht in diesem Zustand die Möglichkeit die Zeit zu verändern, in der die sich im Raum befindlichen Personen normalerweise nach dem Schlafen aufstehen. Es ist ebenfalls möglich, den zur Thermostateinheit gehörenden Bewegungssensor im Zustand Manuell über das Fernbedienungsgerät an- bzw. abzuschalten. Eine solche Abschaltbarkeit des Bewegungssensors hat sich als besonders günstig herausgestellt, wenn bekannt ist, dass sich keine Personen länger in einem Raum aufhalten. Durch ein Abschalten des Bewegungssensors kann beispielsweise verhindert werden, dass in Temperaturregelung durch eine Person, die nur kurzzeitig den Raum betritt, um beispielsweise die Blumen zu gießen, ein Wechsel in einen anderen Modus mit erhöhter Temperatur stattfindet. Das zusätzliche Stellglied, verkörpert durch das Fernbedienung Gerät kann auch den Zustand Auto annehmen. Die Auswahl des anliegenden Zustandes erfolgt dabei durch den Bediener. Im Zustand Auto ist kein direktes Anwählen eines Modus zur Temperaturregelung möglich, die Temperaturregelung und auch die Auswahl des Modus erfolgen automatisch entsprechend der anderen Stellglieder. Allerdings ist eine Veränderung der Solltemperaturen im Zustand Auto durch das Fernbedienung Gerät möglich. Weiterhin können die Schaltzeiten für alle Modi verändert werden, also beispielsweise die Schaltzeiten für den Komfortmodus, bei dem angenehme Raumtemperaturen für anwesende Personen eingestellt werden, oder der Eco-Modus der besonders niedrige Raumtemperaturen zur Einsparung von Heizkosten einregelt. Darüber hinaus ist auch im Zustand Auto ein An- und Abschaltendes Bewegungssensors der Thermostateinheit möglich. Das in dieser Ausführungsform des erfindungsgemäßen Verfahrens zusätzlich vorhandene Stellglied, welches besonders günstigerweise durch ein Fernbedienungsgerät gebildet wird stellt eine weitere Verbesserung des Komforts des Verfahrens für den Benutzer dar. Neben manueller Bedienung vor Ort und sensorgestützter, intelligenter Auswahl verschiedener Betriebsmodi wird so eine Fernbedienbarkeit zur Beeinflussung des Temperaturregelung von außerhalb ermöglicht. Dies bietet weitere entscheidende Vorteile, gerade wenn die Bewohner oder Angestellten, die sich normalerweise in einem Raum aufhalten unterwegs sind.

Zusätzlich gehört zur vorgeschlagenen Erfindung die Verwendung der beschriebenen Thermostateinheit zur Regelung der Raumtemperatur nach dem beschriebenen Verfahren.

In den Zeichnungen ist die Erfindung insbesondere in einem Ausführungsbeispiel schematisch dargestellt. Es zeigen:
- Fig. 1: eine dreidimensionale Ansicht der erfindungsgemäßen Thermostateinheit,
- Fig. 2: eine Seitenansicht der erfindungsgemäßen Thermostateinheit,
- Fig. 3: ein Flussdiagramm des erfindungsgemäßen Verfahrens,
- Fig. 4: eine teilweise geschnittene Seitenansicht eines Heizkörpers mit einer Ausführungsform einer erfindungsgemäßen Thermostateinheit mit Wärmemengenmesser,
- Fig. 5: eine schematische Darstellung des Zusammenwirkens einer erfindungsgemäßen Thermostateinheit mit anderen Geräten.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen ist sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

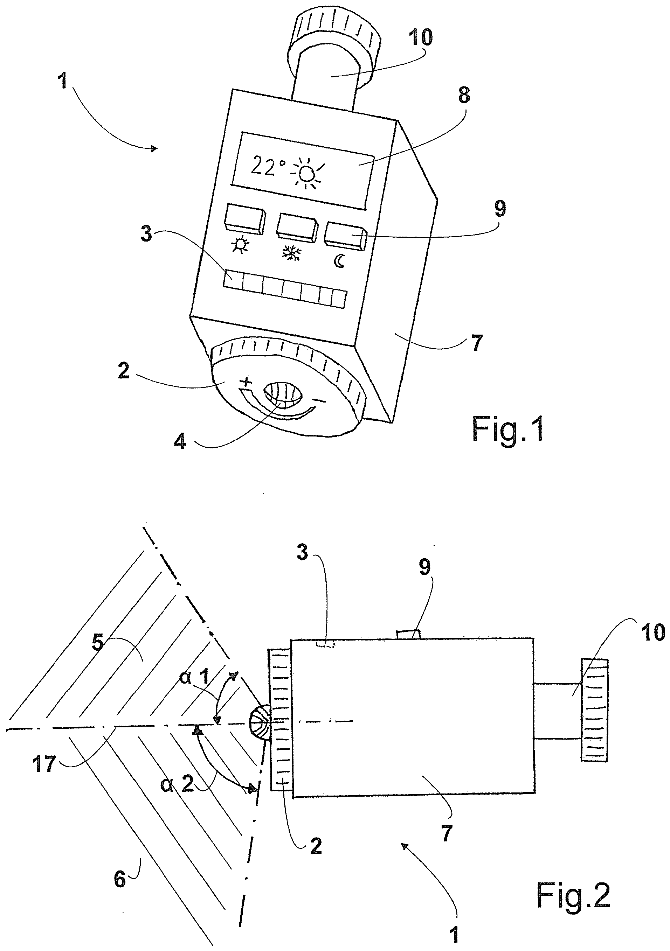

Die Fig. 1 zeigt eine dreidimensionale Ansicht einer möglichen Ausführungsform der Thermostateinheit 1. Unter Thermostateinheit 1 ist die komplette Vorrichtung mit allen Einzelteilen zu verstehen. Auf einer nach oben gerichteten Fläche des Gehäuses 7 der Thermostateinheit 1 ist ein Display 8 zur Anzeige von Informationen angebracht. In der Fig. 1 zeigt das Display 8 beispielsweise die aktuelle Raumtemperatur und ein Symbol für den aktuell ausgeführten Modus an. Weiterhin sind auf der nach oben gerichteten Fläche drei Tastenbedienelemente 9 angeordnet. Unter den drei Tastenbedienelementen 9 sind hier Symbole für verschiedene Modi angebracht, die sich mit den jeweiligen Tastenbedienelementen 9 auswählen lassen. Ein Lichtsensor 3 ist ebenfalls auf der nach oben gerichteten Fläche der Thermostateinheit 1 angebracht.
Auf einer, in Einbaulage vertikal ausgerichteten Fläche ist ein Stellrad 2 angebracht. Das Stellrad weist im Umfang hier eine Rändelung auf, um beim Drehen des Stellrades eine rutschhemmende Wirkung und damit gute Bedienbarkeit zu erzielen. Auf dem Stellrad 2 sind die Symbole "+" und "-" angebracht, die dem Benutzer die Wirkung bei Drehung des Stellrades 2 erklären. In der Mitte des Stellrades 2 befindet sich der Bewegungssensor 4, der zwei voneinander verschiedene Erfassungsfelder überwacht.
An einer anderen, in Einbaulage vertikal ausgerichteten Fläche des Gehäuses 7 ist ein Anschluss 10 an einen Heizkörper angebracht.

Die Fig. 2 zeigt eine mögliche Ausführungsform der erfindungsgemäßen Thermostateinheit in Seitenansicht. Gleiche Bezugszeichen weisen auf gleiche Elemente wie in Fig. 1 hin. Die Trennebene 17 stellt hier die Grenze zwischen den beiden Erfassungsbereichen 5, 6 des Bewegungssensors 4 dar. Im dargestellten Fall verläuft diese Trennebene 17 horizontal. Die Erfassungsbereiche 5, 6 sind durch die jeweiligen Erfassungswinkel α1, α2 definiert. Fig. 2 zeigt eine Seitenansicht der Erfassungsbereiche 5, 6, die durch die beiden Erfassungswinkel α1, α2 definiert sind. In der Draufsicht, also gesehen von oben auf die Fläche mit dem Display 8, würden sich die Erfassungsbereiche als Halbkreise um den Bewegungssensor 4 darstellen.

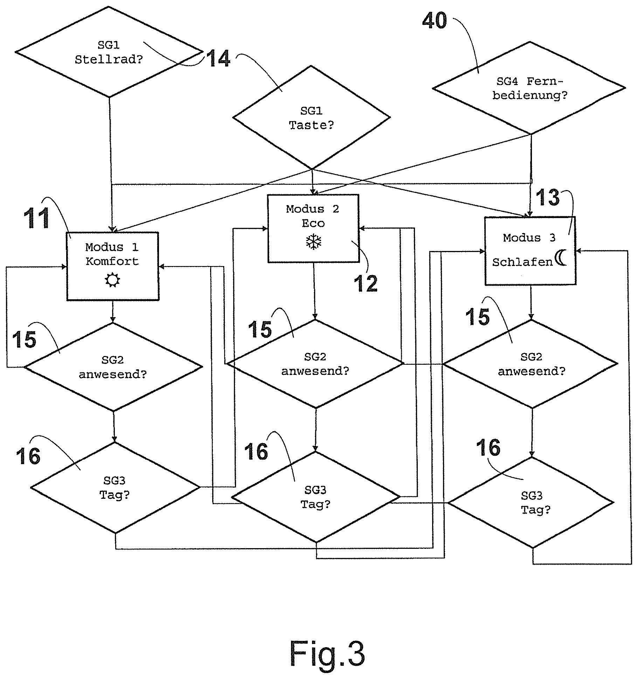

Die Fig. 3 zeigt ein Flussdiagramm des erfindungsgemäßen Verfahrens. Die rechteckig umrahmten Felder 11, 12, 13 stellen dabei verschiedene Modi dar. Ein Modus ist hier ein Teilverfahren zur Temperaturregelung, mit entsprechend zum jeweiligen Modus gehörigen Sollwerten. Die rautenförmig umrahmten Felder 14, 15, 16, 40 stellen Stellglieder im Verfahren dar. Diese Stellglieder können im Flussdiagramm als Abfragen oder Entscheidungen gelesen werden. Der Ausgang nach unten aus einer Raute steht dabei immer für eine Beantwortung der Abfrage mit "nein", seitliche Ausgänge aus einer Abfrage bedeuten eine Beantwortung mit "ja". Zu Beginn wird hier zunächst der erste Modus 11 über das Stellglied 14 "Stellrad" manuell aktiviert. Während der Ausführung des ersten Modus werden kontinuierlich die Abfragen "anwesend?" 15 und "Tag?" 16 durchgeführt. Dabei bedeutet "anwesend?" 15 die Frage, ob sich Personen im Raum befinden. Die Abfrage "Tag?" 16 ermittelt, ob in der Uhr- und Kalenderfunktion Informationen hinterlegt sind, die in Kombination mit der aktuellen Uhrzeit aussagen, dass Schlafenzeit bzw. keine Schlafenszeit vorliegt. Wird die Abfrage "anwesend?" 15 positiv beantwortet wird der erste Modus beibehalten. Wird die Abfrage "anwesend?" 15 negativ beantwortet erfolgt die nächste Abfrage "Tag?" 16. Wird diese Abfrage positiv beantwortet, wird der zweite Modus 12 aktiviert. Da gemäß der zweiten Abfrage "Tag?" keine Schlafenszeit ist, wird in den sparsamsten zweiten Modus gewechselt. Wird die Abfrage "Tag?" 16 negativ beantwortet, d.h. es ist Schlafenszeit, wird der dritte Modus 13 aktiviert.
Ähnliche Zusammenhänge gelten dann für die Ausführung des zweiten 12 und dritten 13 Modus. Das Verfahren durchläuft immer zwei Abfragen 15, 16 und je nach Beantwortung dieser Abfragen wird der aktuell ausgeführte Modus entweder beibehalten oder in einen anderen Modus gewechselt. Die genauen Zusammenhänge sind durch die Pfeile im Flussdiagramm der Fig. 3 zu erkennen.
Die oben dargestellten Abfragen 14 und 40 stellen die manuellen Stellglieder und das zusätzliche Stellglied, gebildet durch ein Fernbedienungsgerät, welches von Außen auf die Thermostateinheit wirkt, dar. Über diese Abfragen/Stellglieder 14, 40 ist es jederzeit möglich, den ausgeführten Modus direkt zu wechseln. Dabei haben die Abfragen bzw. Stellglieder 14, die von den manuellen Eingabeelementen direkt an der Thermostateinheit gebildet werden, höchste Hierarchiestufe. Das bedeutet, dass über dieses Stellglied 14 jederzeit und entgegen anders lautender Abfragen anderer Stellglieder eine Änderung des durchgeführten Modus nach Vorgabe des Stellgliedes erfolgt, welches durch die manuellen Eingabeelemente an der Thermostateinheit gebildet wird. Die Abfragen des durch ein Fernbedienungsgerät gebildeten Stellgliedes 40 liegen in der Hierarchie nur eine Ebene unter dem Stellglied 14 und ermöglichen somit einen Wechsel des ausgeführten Modus jederzeit, außer wenn das Stellglied 14 gegenteilige Abfrageergebnisse liefert.

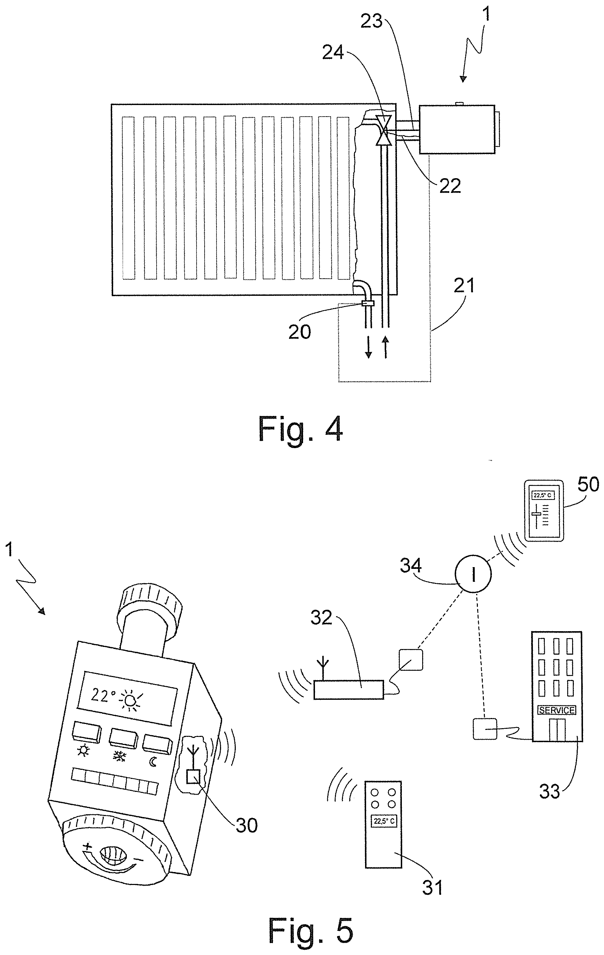

Fig. 4 zeigt eine teilweise geschnittene Seitenansicht eines Heizkörpers mit einer Ausführungsform einer erfindungsgemäßen Thermostateinheit 1 mit Wärmemengenmesser. Es ist ein Heizkörper zu sehen, an dem rechts oben eine erfindungsgemäße Thermostateinheit 1 montiert ist. Die Thermostateinheit 1 regelt die Heizleistung des Heizkörpers und damit die Raumtemperatur. Zur Steuerung der Durchflussmenge an Heizmedium durch den Heizkörper greift die Thermostateinheit 1 auf das Ventil 24 zu. Zur Erkennung, ob die Thermostateinheit 1 tatsächlich an einem Ventil 24 angeschlossen ist, ist der Kontaktsensor 23 vorgesehen. Wird die Thermostateinheit 1 vom Heizkörper demontiert, so zeigt dies der Kontaktsensor 23 an. Neben dem Kontaktsensor ist im Anschluss der Thermostateinheit 1 ein Temperatursensor 22 vorgesehen, der die Temperatur des Heizmediums im Vorlauf, d.h. auf der Seite, auf der das Heizmedium, geregelt durch die Thermostateinheit 1 in den Heizkörper einströmt, misst. Diese Messung der Vorlauftemperatur wird dann später für die Bestimmung der umgesetzten Wärmemenge am Heizkörper benötigt. Am Rücklauf des Heizkörpers, im unteren Bereich von Fig. 4 dargestellt, ist ein weiterer Temperatursensor 20 zur Messung der Temperatur des Nachlaufs vorgesehen unter Nachlauf ist das Heizmedium zu verstehen, welches nach der Abgabe der Wärme im Heizkörper wieder aus dem Heizkörper herausfließt. Auch die Temperatur des Nachlaufs geht als Eingangsinformation in die Berechnung der am Heizkörper umgesetzten Wärmemenge ein.
Der Temperatursensor 20 befindet sich außerhalb der Thermostateinheit 1. Der Temperatursensor 20 zur Messung der Nachlauftemperatur ist deshalb durch einen Sensoranschluss 21 mit der Thermostateinheit 1 verbunden. Dieser Sensoranschluss 21 kann dabei, wie im in Fig. 4 dargestellten Fall durch eine Kabelverbindung gebildet werden. Allerdings ist es auch möglich, den Sensoranschluss 21 durch eine Funkverbindung oder Ähnliches zu realisieren. Die Datenverarbeitungseinheit der Thermostateinheit 1 berechnet aus der Vorlauftemperatur, ermittelt durch den Temperatursensor 22, der Nachlauftemperatur, ermittelt durch den Temperatursensor 20 und der Raumtemperatur, ermittelt durch den in der Thermostateinheit 1 angebrachten Temperaturfühler die am Heizkörper umgesetzte Wärmemenge, welche von der Thermostateinheit aufgezeichnet und abgespeichert wird.

Fig. 5 zeigt eine schematische Darstellung des Zusammenwirkens einer erfindungsgemäßen Thermostateinheit mit anderen Geräten. In der in Fig. 5 dargestellten Ausführungsform weist die Thermostateinheit 1 ein Sende- und Empfangsmodul 30 auf. Dieses Sende- und Empfangsmodul 30 ermöglicht einen Datentransfer der Thermostateinheit 1 mit anderen Geräten. Unter Datentransfer ist hierzu verstehen, dass Daten sowohl von der Thermostateinheit 1 zu den anderen Geräten als auch ein Datentransfer von den anderen Geräten zur Thermostateinheit 1 möglich ist. Dargestellt ist als mögliches anderes Gerät eine Funkfernbedienung 31. Diese Funkfernbedienung kann beispielsweise dazu genutzt werden, die verschiedenen Betriebsmodi der Thermostateinheit 1 zu wechseln oder auch um die Thermostateinheit 1 komplett auszuschalten. Weiterhin ist auch eine Anzeige verschiedener Informationen zu Raumtemperatur, Solltemperatur,... auf einen Display der Funkfernbedienung 31 möglich. Weiterhin kann, ermöglicht durch das Sende- und Empfangsmodul 30 eine Kommunikation der Thermostateinheit 1 mit einem Gateway 32 erfolgen. Unter einem Gateway 32 ist dabei ein Gerät zu verstehen welches auf der einen Seite mit einer oder mehreren Thermostateinheiten 1 kommuniziert und auf der anderen Seite mit anderen Geräten oder einem Datennetzwerk, wie beispielsweise dem Internet 34 in Verbindung steht. Ein Gateway 32 bildet somit eine Art Schnittstelle zwischen mehreren Kommunikationswegen oder Geräten. Der Gateway 32 kann so gestaltet sein, dass er auch einen Computer aufweist, welcher zur Ausführung von Programmen und Berechnungen und zum Abspeichern von Daten geeignet ist. Im dargestellten Fall ist der Gateway 32 mit dem Internet 34 verbunden. Über das Internet 34 ist weiterhin eine Verbindung vom Gateway 32 zu einem externen Dienstleister 33 möglich. Somit ist eine Kommunikation von der Thermostateinheit 1 über den Gateway 32 und das Internet 34 bis zu einem externen Dienstleister 33 möglich. Diese Verbindung kann genutzt werden, um beispielsweise Daten zur umgesetzten Wärmemenge am Heizkörper an einen externen Dienstleister 33 zu übermitteln, welcher dann auf Basis der übermittelten Wärmemengen die Heizkostenabrechnung erstellt. Weiterhin ist eine Verbindung des Gateway 32 über das Internet 34 mit einem Fernbedienungsgerät 50 möglich. Durch diese Verbindung kann die Thermostateinheit 1 von jedem mit dem Internet verbundenen Ort abgefragt, bedient, eingestellt oder anderweitig manipuliert werden.
Eine Verbindung der Thermostateinheit 1 mit dem Internet 34 kann auch ohne den Weg über einen Gateway 32 realisiert werden. So kann das Sende- und Empfangsmodul 30 so ausgebildet sein, dass es beispielsweise über eine Mobilfunk- oder WLAN-Verbindung direkt mit dem Internet 34 kommuniziert.

In diesem Zusammenhang wird insbesondere darauf hingewiesen, dass alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Offenbarung.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen. Die Erfindung ist durch die nachfolgende Ansprüche definiert.

## Patentansprüche

1. Thermostateinheit (1) umfassend an oder in einem Gehäuse angeordnet:
- einen Temperaturfühler,
- einen Temperaturregler,
- mindestens einen Lichtsensor (3),
- eine Datenverarbeitungseinheit,
- und mindestens einen, wenigstens zwei voneinander verschiedene Erfassungsfelder (5, 6) umfassenden Bewegungssensor (4), wobei eine Temperaturregelung basierend auf wenigstens einem Sensorsignal vorgesehen ist, **dadurch gekennzeichnet, dass** die Erfassungsfelder durch eine Trennebene (17) getrennt sind, die Lage der Erfassungsfelder (5, 6) am Bewegungssensor (4) einstellbar ist und die Trennebene (16) relativ zum Gehäuse im Wesentlichen horizontal ausgerichtet vorgesehen ist.

2. Thermostateinheit (1) nach Anspruch 1, **dadurch gekennzeichnet, dass** die Datenverarbeitungseinheit eine Uhrzeit- und Kalenderfunktion sowie einen Speicher umfasst, wobei in dem Speicher Sollwerte für die Temperatur sowie Zeit- und Datumswerte zur automatischen Temperaturregelung ablegbar sind und/oder dadurch, dass ein Eingabeelement, insbesondere ein Stellrad (2) für wenigstens eine der Funktionen:
- manuelle Einstellung der Temperatur,
- Einstellung der Sollwerte für die Temperatur im Speicher,
- Einstellung der Zeit- und Datumswerte im Speicher,
- Ausschalten der Thermostateinheit (1),
- Einstellung der Empfindlichkeit mindestens eines der Sensoren,
oder Kombinationen daraus vorgesehen ist und/oder dadurch, dass an der Thermostateinheit ein Display (8) und/oder wenigstens ein Tastenbedienelement (9) vorgesehen ist.

3. Thermostateinheit (1) nach Anspruch 1 oder 2, **dadurch gekennzeichnet, dass** das mindestens ein Tastenbedienelement (9) mindestens eine der Funktionen:
- manuelle Auswahl verschiedener Modi der Temperaturregelung,
- Eingabe von Sollwerten für die Temperatur im Speicher
- und Eingabe von Zeit- und Datumswerten in den Speicher aufweist.

4. Thermostateinheit (1) nach einem der vorhergehenden Ansprüche, **dadurch gekennzeichnet, dass** die Thermostateinheit (1) über einen Anschluss (10) direkt an einem Heizkörper anbringbar ist, insbesondere wobei Lage und Ausrichtung der Thermostateinheit (1) und/oder des wenigstens einen Sensors (3, 4) im Raum, bezogen auf den Anschluss am Heizkörper (10), einstellbar sind/ist und/oder dadurch, dass die Erfassungsbereiche (5, 6) je einen Erfassungswinkel (α1, α2) relativ zur Trennebene (17) aufweisen, insbesondere wobei die Erfassungswinkel (α1, α2) zwischen 0° und 179°, insbesondere zwischen 10° und 145° bevorzugt zwischen 30° und 90° vorgesehen sind und/oder durch eine Überlappung der Erfassungsfelder (5, 6).

5. Thermostateinheit (1) nach Anspruch 4, **dadurch gekennzeichnet, dass** , der Bewegungssensor (4) als Infrarotsensor, Radarsensor oder Ultraschallsensor ausgebildet ist und zur automatischen Temperatur-regelung wenigstens ein, insbesondere zwei bevorzugt drei unterschiedliche Modi vorgesehen sind, wobei wahlweise ein Signal des Lichtsensors (3), des Bewegungssensors (4), der Tastenbedienelemente (9), des Stellrades (2) und/oder der Zeit- und Kalenderfunktion als Stellglieder für den ausgewählten Modus vorgesehen sind.

6. Verfahren zur automatischen Regelung der Raumtemperatur mit einer Thermostateinheit (1) gemäß einem der Ansprüche 1 bis 5 oder 11 bis 14 mit mindestens drei Modi (11, 12, 13) wobei mindestens drei Stellglieder (14, 15, 16) vorgesehen sind, welche gleichzeitig oder wechselweise Einfluss auf die Auswahl des ausgeführten Modus nehmen, wenigstens umfassend die Schritte:
I) manuelle Auswahl des zuerst auszuführenden Modus,
II) Temperaturregelung nach dem Sollwert des auszuführenden Modus,
III) automatische Auswahl und/oder automatischer Wechsel des Modus in Abhängigkeit von den Stellgliedern und Temperaturregelung nach dem Sollwert des jeweils ausgewählten Modus.

7. Verfahren nach Anspruch 6, **dadurch gekennzeichnet, dass** als Stellglieder (14, 15, 16):
- manuelles Stellen, realisiert durch Tasten und Drehregler (2, 9),
- automatisch erzeugte Informationen über eine Anwesenheit von Personen im Raum, realisiert durch eine Kombination der Signale des Bewegungssensors (4) und des Lichtsensors (3)
- und zeitabhängige und vorprogrammierbare Informationen die in Abhängigkeit von Uhr- und/oder Kalenderfunktion wirksam werden,
vorgesehen sind und oder dadurch, dass ein erster Modus (11) zur Regelung einer Temperatur bei Anwesenheit von Personen im Raum vorgesehen ist, wobei während der Aktivität des Modus (11) kontinuierlich Anwesenheit von Personen im Raum geprüft wird, wobei die Anwesenheit aus Ausgaben des Lichtsensors (3) und/oder des Bewegungssensors (4), welcher mindestens zwei Erfassungsbereiche (5, 6) überwacht, abgeleitet wird, und Aktivität nur festgestellt wird, wenn Bewegung in beiden Erfassungsfeldern erkannt wird, insbesondere wobei während der Aktivität des ersten Modus (11) kontinuierlich vorprogrammierte Daten mit den Ausgaben der Uhr- und Kalenderfunktion verglichen werden, oder dadurch, dass ein zweiter Modus (12) zur Regelung der Temperatur bei Abwesenheit von Personen vorgesehen ist, wobei während der Aktivität des Modus (12) kontinuierlich Anwesenheit von Personen im Raum geprüft wird, wobei die Anwesenheit des aus Ausgaben des Lichtsensors (3) und/oder des Bewegungssensors (4), welcher mindestens zwei Erfassungsbereiche (5, 6) überwacht abgeleitet wird und Aktivität nur festgestellt wird, wenn Bewegung in beiden Erfassungsfeldern erkannt wird oder dadurch, dass ein dritter Modus (13) bei anwesenden nicht aktiven Personen vorgesehen ist, wobei während der Aktivität des Modus (13) kontinuierlich Anwesenheit von Personen im Raum geprüft wird, wobei die Anwesenheit aus Ausgaben des Lichtsensors (3) und/oder des Bewegungssensors (4), welcher mindestens zwei Erfassungsbereiche (5, 6) überwacht abgeleitet wird und Aktivität nur festgestellt wird, wenn Bewegung in beiden Erfassungsfeldern erkannt wird, insbesondere wobei während der Aktivität des dritten Modus (13) kontinuierlich vorprogrammierte Daten mit den Ausgaben der Uhr- und Kalenderfunktion verglichen werden.

8. Verfahren nach den Ansprüchen 6 oder 7, **dadurch gekennzeichnet, dass** in jedem Modus (11, 12, 13) die Datenverarbeitungseinheit in definierten zeitlichen Abständen eine Eingangsinformation der Stellglieder abfragt und bei Veränderung der Eingangsinformation ein Wechsel des Modus durchgeführt wird, wobei die zeitlichen Abstände der Abfragen der Eingangsinformation insbesondere zwischen 0,01 und 5 Minuten, insbesondere 0,02 und 2 Minuten, bevorzugt 0,1 Sekunden und 30 Sekunden.

9. Verfahren nach den Ansprüchen 6 bis 8, **dadurch gekennzeichnet, dass** durch die Tastenbedienelemente (9) und/oder das Stellrad (2) eine manuelle Auswahl der Modi und/oder Stellglieder durchgeführt wird oder durch Stellglieder, insbesondere durch das Stellrad (2) das Verfahren/die Thermostateinheit (1) abgeschaltet wird.

10. Verwendung der Thermostateinheit (1) nach den Ansprüchen 1 bis 5 zur Durchführung des Verfahrens nach den Ansprüchen 6 bis 9.

11. Thermostateinheit (1) nach einem der Ansprüche 1-5, wobei die Thermostateinheit an einem Heizkörper angeordnet ist, **dadurch gekennzeichnet, dass** in der Thermostateinheit ein Temperatursensor (22) zur Messung der Vorlauftemperatur und ein Temperatursensor (20) an einem Rücklauf des Heizkörpers zur Messung der Rücklauftemperatur vorgesehen sind und die Datenverarbeitungseinheit aus den Messwerten dieser Temperatursensoren in Kombination mit dem Messwert des Temperaturfühlers, der die Raumtemperatur misst, und einer Zeitinformation, die von der Uhrzeit- und Kalenderfunktion bereitgestellt wird, die Wärmemenge berechnet, die an dem Heizkörper, dessen Temperatur die Thermostateinheit regelt, umgesetzt wird.

12. Thermostateinheit (1) nach Anspruch 11, **dadurch gekennzeichnet, dass** der Temperatursensor (22) zur Messung der Vorlauftemperatur in den Anschluss (10) der Thermostateinheit (1) integriert ist und der Temperatursensor (20) zur Messung der Rücklauftemperatur sich außerhalb der Thermostateinheit (1) befindet und über einen Sensoranschluss (21) mit der Thermostateinheit (1) verbunden ist und dieser Sensoranschluss (21) als Kabelverbindung oder Drahtlosverbindung ausgeführt ist und/oder ein Kontaktsensor (23) im Anschluss (10) vorgesehen ist, der ermittelt, ob die Thermostateinheit (1) an einem Ventil (24) angeschlossen ist.

13. Thermostateinheit (1) nach einem der Ansprüche 1-5 oder 11-12, **dadurch gekennzeichnet, dass** ein Sende- und Empfangsmodul (30) vorgesehen ist, welches Datentransfer der Thermostateinheit (1) mit einem Gateway (32) und/oder mit dem Internet (34) ermöglicht und/oder das Sende- und Empfangsmodul (30) eine Fernbedienung der Thermostateinheit (1) durch mindestens eine portable Funkfernbedienung (31) und/oder durch den Gateway (32) und/oder über das Internet (34) ermöglicht.

14. Thermostateinheit (1) nach Anspruch 13, **dadurch gekennzeichnet, dass** das Sende- und Empfangsmodul (30) Daten zur Wärmemenge, die an dem Heizkörper umgesetzt wird, welcher von der Thermostateinheit (1) geregelt wird, übermittelt, wobei diese Daten durch den Gateway (32) und/oder durch einen externen Dienstleister (33), der über eine Datenverbindung, insbesondere das Internet (34), mit dem Gateway (32) oder direkt mit der Thermostateinheit verbunden ist, ausgewertet werden.

15. Verfahren nach einem der Ansprüche 6 bis 9, **dadurch gekennzeichnet, dass** als weiteres Stellglied (40) ein Fernbedienungsgerät (50) vorgesehen ist, das mindestens zwei Zustände annehmen kann, beispielsweise einen ersten Zustand (Manuell 51) und einen zweiten Zustand (Auto 52) und dessen Zustand, vom Bediener bestimmt wird, wobei das Fernbedienungsgerät (50) im ersten Zustand (Manuell 51) zumindest einen Wechsel der Modi (11, 12, 13), eine Änderung von im Speicher hinterlegten Solltemperaturen und/oder der Aufstehzeit sowie ein Ein- und Ausschalten des Bewegungssensors (4) ermöglicht und wobei das Fernbedienungsgerät (50) im zweiten Zustand (Auto 52) eine Änderung von im Speicher hinterlegten Solltemperaturen und/oder der Schaltzeiten für einen Komfortmodus (11) und einen Eco-Modus (12) sowie ein Ein- und Ausschalten des Bewegungssensors (4) ermöglicht und ein Zugriff des Stellgliedes (40), verkörpert durch das Fernbedienungsgerät (50) auf die Thermostateinheit jederzeit möglich ist und dieser Zugriff in der Bearbeitungshierarchie gleichwertig oder eines Stufe niedriger als der Zugriff des Stellgliedes (14), verkörpert durch die manuellen Eingabeelemente Stellrad (2) oder Tastenbedienelement(e) (9) ist.

## Claims

1. Thermostat unit (1) comprising provided on or in a housing
- a temperature sensor,
- a temperature controller,
- at least one light sensor (3),
- a data processing unit,
- and at least one motion sensor (4) comprising at least two different detection fields (5, 6), wherein a temperature control based on at least one sensor signal is provided, **characterised in that** the detection fields are separated by a separation plane (17), the position of the detection fields (5, 6) on the motion sensor (4) is adjustable and the separation plane (16) is provided substantially horizontally aligned relative to the housing.

2. Thermostat unit (1) according to claim 1, **characterised in that** the data processing unit comprises a time and calendar function as well as a memory, wherein desired values for the temperature as well as time and date values for automatic temperature control can be stored in the memory and/or **in that** an input element, in particular a setting wheel (2) for at least one of the functions:
- manual adjustment of the temperature,
- Setting the reference value for the temperature in the memory,
- Setting the time and date values in the memory,
- Switching off the thermostat unit (1),
- Setting the sensitivity of at least one of the sensors,
or combinations thereof is provided and/or **in that** a display (8) and/or at least one key operating element (9) is provided on the thermostat unit.

3. Thermostat unit (1) according to claim 1 or 2, **characterised in that** the at least one key operating element (9) provides at least one of the functions:
- manual selection of different modes of temperature control,
- Input of reference values for the temperature in the memory
- and entering time and date values in the memory.

4. Thermostat unit (1) according to any of the preceding claims, **characterised in that** the thermostat unit (1) can be attached directly to a radiator via a connection (10), in particular wherein the position and orientation of the thermostat unit (1) and/or the at least one sensor (3, 4) in the room, relative to the connection on the radiator (10) are/is adjustable and/or **in that** the detection areas (5, 6) each have a detection angle (α1, α2) relative to the separation plane (17), in particular wherein the detection angles (α1, α2) are provided between 0° and 179°, in particular between 10° and 145° preferably between 30° and 90° and/or by an overlapping of the detection fields (5, 6).

5. Thermostat unit (1) according to claim 4, **characterised in that** the motion sensor (4) is designed as an infrared sensor, radar sensor or ultrasonic sensor and for automatic temperature control at least one, in particular two, preferably three different modes are provided, wherein optionally a signal of the light sensor (3), the motion sensor (4), the key operating elements (9), the setting wheel (2) and/or the time and calendar function are provided as adjusting elements for the selected mode.

6. Method of automatically regulating the room temperature with a thermostat unit (1) according to any of claims 1 to 5 or 11 to 14 having at least three modes (11, 12, 13) wherein at least three actuators (14, 15, 16) are provided which simultaneously or alternately influence the selection of the executed mode, at least comprising the steps
I) manual selection of the mode to be executed first,
II) Temperature control according to the reference value of the mode to be executed,
III) automatic selection and/or automatic change of mode depending on the actuators and temperature control according to the reference value of the selected mode.

7. Method according to claim 6, **characterised in that** as actuators (14, 15, 16):
- manual setting, realised by keys and control dial (2, 9),
- automatically generated information about the presence of individuals in the room, realised by a combination of the signals of the motion sensor (4) and the light sensor (3)
- and time-dependent and pre-programmable information that takes effect depending on the clock and/or calendar function,
are provided and/or **in that** a first mode (11) is provided for controlling a temperature in the presence of individuals in the room, wherein during the activity of the mode (11) the presence of individuals in the room is continuously checked, wherein the presence is derived from outputs of the light sensor (3) and/or the motion sensor (4), which monitors at least two detection areas (5, 6), and activity is only detected, when motion is detected in both detection fields, in particular wherein during the activity of the first mode (11) pre-programmed data are compared continuously with the outputs of the clock and calendar function, or **in that** a second mode (12) is provided for controlling the temperature in the absence of individuals, whereby during the activity of the mode (12) the presence of individuals in the room is continuously checked, wherein the presence is derived from outputs of the light sensor (3) and/or the motion sensor (4), which monitors at least two detection fields (5, 6), and activity is detected only if motion is detected in both detection fields or **in that** a third mode (13) in the presence of non-active individuals is provided, wherein during the activity of the mode (13) the presence of individuals in the room is continuously checked, whereby the presence is derived from outputs of the light sensor (3) and/or the motion sensor (4), which monitors at least two detection fields (5, 6), and activity is only detected if motion is detected in both detection fields, in particular wherein during the activity of the third mode (13) pre-programmed data are continuously compared with the outputs of the clock and calendar function.

8. Method according to claims 6 or 7, **characterised in that** in each mode (11, 12, 13) the data processing unit interrogates an input information of the actuators at defined time intervals and when the input information changes a change of mode is carried out, wherein the time intervals of the interrogations of the input information being in particular between 0.01 and 5 minutes, in particular 0.02 and 2 minutes, preferably 0.1 seconds and 30 seconds.

9. Method according to claims 6 to 8, **characterised in that** a manual selection of the modes and/or actuators is carried out via the key operating elements (9) and/or the setting wheel (2) or the method/the thermostat unit (1) is switched off by setting elements, in particular by the setting wheel (2).

10. Use of the thermostat unit (1) according to claims 1 to 5 to carry out the method according to claims 6 to 9.

11. Thermostat unit (1) according to any of claims 1-5, with the thermostat unit being arranged on a radiator, **characterised in that** a temperature sensor (22) for measuring the outgoing temperature and a temperature sensor (20) on a return of the radiator for measuring the return temperature are provided in the thermostat unit, and the data processing unit calculates based on the measured values of these temperature sensors in combination with the measured value by the temperature sensing device, which measures the room temperature, and a time information provided by the time and calendar function the amount of heat that is converted at the radiator whose temperature is controlled by the thermostatic unit.

12. Thermostat unit (1) according to claim 11, **characterised in that** the temperature sensor (22) for measuring the outgoing temperature is integrated in the connector (10) of the thermostat unit (1) and the temperature sensor (20) for measuring the return temperature is located outside the thermostat unit (1) and is connected to the thermostat unit (1) via a sensor connection (21) and this sensor connection (21) is designed as a cable connection or wireless connection and/or a contact sensor (23) is provided in the connector (10), which determines whether the thermostat unit (1) is connected to a valve (24).

13. Thermostat unit (1) according to any of claims 1-5 or 11-12, **characterised in that** a transmitting and receiving module (30) is provided which enables data transfer of the thermostat unit (1) with a gateway (32) and/or with the internet (34) and/or the transmitting and receiving module (30) enables remote control of the thermostat unit (1) by at least one portable radio remote control (31) and/or via the gateway (32) and/or via the internet (34).

14. Thermostat unit (1) according to claim 13, **characterised in that** the transmitting and receiving module (30) transmits data on the amount of heat converted at the radiator, which is controlled by the thermostat unit (1), wherein these data are evaluated by the gateway (32) and/or by an external service provider (33), which is connected to the gateway (32) via a data connection, in particular the internet (34), or directly to the thermostat unit.

15. Method according to any of claims 6 to 9, **characterised in that** a remote control device (50) is provided as a further actuator (40), which can assume at least two states, for example a first state (manual 51) and a second state (auto 52) and wherein its state is determined by the operator, wherein the remote control device (50) in the first state (manual 51) enables at least a change of modes (11, 12, 13), a change of target temperatures stored in the memory and/or the rise time as well as switching the motion sensor (4) on and off and wherein the remote control device (50) in the second state (Auto 52) enables a change of reference temperatures stored in the memory and/or the switching times for a comfort mode (11) and an eco-mode (12) as well as switching the motion sensor (4) on and off and an access of the actuator (40), embodied by the remote control unit (50) to the thermostat unit is possible at any time and this access is equivalent or one level lower in the processing hierarchy than the access of the actuator (14), embodied by the manual input elements setting wheel (2) or key operating element(s) (9).

## Revendications

1. Unité de thermostat (1) comprenant un dispositif placé sur ou dans un boîtier
- un capteur de température,
- un régulateur de température,
- au moins un capteur de lumière (3),
- une unité de traitement des données,
- et au moins un capteur de mouvement (4) comprenant au moins deux zones de détection différentes (5, 6), une régulation de température basée sur au moins un signal de capteur étant prévue, **caractérisé en ce que** les zones de détection sont séparées par un plan de séparation (17), la position des zones de détection (5, 6) sur le capteur de mouvement (4) est réglable et le plan de séparation (16) est prévu orienté essentiellement horizontalement par rapport au boîtier.

2. Unité de thermostat (1) selon la revendication 1, **caractérisée en ce que** l'unité de traitement des données comprend une fonction de temps et de calendrier ainsi qu'une mémoire, des valeurs de consigne pour la température ainsi que des valeurs de temps et de date pour la régulation automatique de la température pouvant être enregistrées dans la mémoire et/ou **en ce qu'**un élément d'entrée, en particulier une roue de réglage (2) pour au moins une des fonctions :
- réglage manuel de la température,
- réglage de la valeur de référence pour la température dans la mémoire,
- réglage des valeurs de l'heure et de la date dans la mémoire,
- éteindre le thermostat (1),
- réglage de la sensibilité d'au moins un des capteurs,
ou des combinaisons de ces éléments sont prévus et/ou qu'un écran (8) et/ou au moins un élément de commande à clé (9) sont prévus sur l'unité de thermostat.

3. Unité de thermostat (1) selon la revendication 1 ou 2, **caractérisée en ce qu'**au moins un élément de commande à clé (9) assure au moins une des fonctions :
- sélection manuelle des différents modes de régulation de la température,
- saisie de valeurs de référence pour la température dans la mémoire
- et saisie des valeurs de l'heure et de la date dans la mémoire.

4. Unité de thermostat (1) selon l'une des revendications précédentes, **caractérisée en ce que** l'unité de thermostat (1) peut être fixée directement à un radiateur par l'intermédiaire d'un raccord (10), en particulier dans laquelle la position et l'orientation de l'unité de thermostat (1) et/ou d'au moins un capteur (3, 4) dans la pièce, par rapport au raccord sur le radiateur (10) est/sont réglables et/ou **en ce que** les zones de détection (5, 6) ont chacun un angle de détection (α1, α2) par rapport au plan de séparation (17), en particulier dans lequel les angles de détection (α1, α2) sont prévus entre 0° et 179°, en particulier entre 10° et 145°, de préférence entre 30° et 90° et/ou par un chevauchement des zones de détection (5, 6).

5. Unité de thermostat (1) selon la revendication 4, **caractérisée en ce que** le capteur de mouvement (4) est conçu comme un capteur infrarouge, un capteur radar ou un capteur à ultrasons et **en ce qu'**au moins un, en particulier deux, de préférence trois modes différents sont prévus pour la régulation automatique de la température, un signal du capteur de lumière (3), du capteur de mouvement (4), des éléments de commande à clé (9), de la roue de réglage (2) et/ou de la fonction de temps et de calendrier étant prévus en option comme éléments de réglage pour le mode sélectionné.

6. Procédé de régulation automatique de la température ambiante avec une unité de thermostat (1) selon une des revendications 1 à 5 ou 11 à 14 ayant au moins trois modes (11, 12, 13), dans lequel au moins trois actionneurs (14, 15, 16) sont prévus qui influencent simultanément ou alternativement la sélection du mode exécuté, comprenant au moins les étapes
I) sélection manuelle du mode à exécuter en premier lieu,
II) contrôle de la température en fonction de la valeur de référence du mode à exécuter,
III) sélection automatique et/ou le changement automatique de mode en fonction des actionneurs et la régulation de la température en fonction de la valeur de référence du mode sélectionné.

7. Procédé selon la revendication 6, **caractérisée en ce que** comme les actionneurs (14, 15, 16) :
- réglage manuel, réalisé par des touches et un cadran de commande (2, 9),
- des informations générées automatiquement sur la présence de personnes dans la pièce, réalisées par une combinaison des signaux du capteur de mouvement (4) et du capteur de lumière (3)
- et des informations préprogrammées et dépendantes du temps qui prennent effet en fonction de la fonction horloge et/ou calendrier,
sont prévus et/ou **en ce qu'**un premier mode (11) est prévu pour contrôler une température en présence de personnes dans la pièce, la présence de personnes dans la pièce étant contrôlée en permanence pendant l'activité du mode (11), la présence étant dérivée des sorties du capteur de lumière (3) et/ou du capteur de mouvement (4), qui surveille au moins deux zones de détection (5, 6), et l'activité étant uniquement détectée, lorsqu'un mouvement est détecté dans les deux zones de détection, en particulier lorsque, pendant l'activité du premier mode (11), des données préprogrammées sont comparées en continu avec les sorties de la fonction horloge et calendrier, ou lorsqu'un second mode (12) est prévu pour contrôler la température en l'absence des personnes, la présence des personnes dans la pièce étant contrôlée en continu pendant l'activité du mode (12), dans lequel la présence est dérivée des sorties du capteur de lumière (3) et/ou du capteur de mouvement (4), qui surveille au moins deux zones de détection (5, 6), et l'activité n'est détectée que si un mouvement est détecté dans les deux zones de détection ou **en ce qu'**un troisième mode (13) en présence des personnes non actifs est prévu, dans lequel pendant l'activité du mode (13) la présence des personnes dans la pièce est contrôlée en permanence, dans lequel la présence est dérivée des sorties du capteur de lumière (3) et/ou du capteur de mouvement (4), qui surveille au moins deux zones de détection (5, 6), et l'activité n'est détectée que si un mouvement est détecté dans les deux zones de détection, en particulier dans lequel, pendant l'activité du troisième mode (13), des données préprogrammées sont continuellement comparées aux sorties de la fonction horloge et calendrier.

8. Procédé selon les revendications 6 ou 7, **caractérisé en ce que** dans chaque mode (11, 12, 13), l'unité de traitement des données interroge une information d'entrée des actionneurs à des intervalles de temps définis et, lorsque l'information d'entrée change, un changement de mode est effectué, les intervalles de temps des interrogations de l'information d'entrée étant en particulier compris entre 0,01 et 5 minutes, en particulier entre 0,02 et 2 minutes, de préférence entre 0,1 seconde et 30 secondes.

9. Procédé selon les revendications 6 à 8, **caractérisé en ce qu'**une sélection manuelle des modes et/ou des actionneurs est effectuée par l'intermédiaire des éléments de commande à clé (9) et/ou de la roue de réglage (2) ou **en ce que** le procédé/l'unité thermostatique (1) est mis hors service par des éléments de réglage, en particulier par la roue de réglage (2).

10. Utilisation de l'unité de thermostat (1) selon les revendications 1 à 5 pour exécuter le procédé selon les revendications 6 à 9.

11. Unité de thermostat (1) selon une des revendications 1 à 5, l'unité de thermostat étant disposée sur un radiateur, **caractérisée en ce que** dans l'unité de thermostat sont prévus un capteur de température (22) pour mesurer la température de départ et un capteur de température (20) sur un retour du radiateur pour mesurer la température de retour, et l'unité de traitement des données calcule, sur la base des valeurs mesurées par ces capteurs de température en combinaison avec la valeur mesurée par le dispositif de détection de la température, qui mesure la température ambiante, et une information temporelle fournie par la fonction de temps et de calendrier, la quantité de chaleur qui est convertie au niveau du radiateur dont la température est contrôlée par l'unité de thermostat.

12. Unité de thermostat (1) selon la revendication 11, **caractérisée en ce que** le capteur de température (22) pour la mesure de la température de sortie est intégré dans le connecteur (10) de l'unité de thermostat (1) et le capteur de température (20) pour la mesure de la température de retour est situé à l'extérieur de l'unité de thermostat (1) et est relié à l'unité de thermostat (1) par l'intermédiaire d'une connexion de capteur (21) et cette connexion de capteur (21) est conçue comme une connexion par câble ou une connexion sans fil et/ou un capteur de contact (23) est prévu dans le connecteur (10), qui détermine si l'unité de thermostat (1) est reliée à une vanne (24).

13. Unité de thermostat (1) selon l'une des revendications 1-5 ou 11-12, **caractérisé en ce qu'**il est prévu un module d'émission et de réception (30) qui permet le transfert de données du thermostat (1) avec une passerelle (32) et/ou avec l'Internet (34) et/ou le module émetteur et récepteur (30) permet la commande à distance du thermostat (1) par au moins une télécommande radio portable (31) et/ou via la passerelle (32) et/ou via l'Internet (34).

14. Unité de thermostat (1) selon la revendication 13, **caractérisé en ce que** le module d'émission et de réception (30) transmet des données sur la quantité de chaleur convertie au niveau du radiateur, qui est commandé par le thermostat (1), ces données étant évaluées par la passerelle (32) et/ou par un fournisseur de services externe (33), qui est relié à la passerelle (32) par une connexion de données, en particulier l'Internet (34), ou directement au thermostat.

15. Procédé selon l'une des revendications 6 à 9, **caractérisé en ce qu'**il est prévu comme autre actionneur (40) un dispositif de commande à distance (50) qui peut prendre au moins deux états, par exemple un premier état (manuel 51) et un deuxième état (Auto 52) et dont l'état est déterminé par l'opérateur, le dispositif de commande à distance (50) permettant dans le premier état (manuel 51) au moins un changement de mode (11, 12, 13), une modification des températures de consigne enregistrées dans la mémoire et/ou du temps de montée ainsi que la mise en marche et l'arrêt du capteur de mouvement (4) et dans lequel le dispositif de télécommande (50) permet, dans le deuxième état (Auto 52), une modification des températures de consigne enregistrées dans la mémoire et/ou des temps de montée pour un mode confort (11) et un mode éco (12) ainsi que la mise en marche et l'arrêt du capteur de mouvement (4) et un accès de l'actionneur (40), incarnée par la télécommande (50) à l'unité de thermostat est possible à tout moment et cet accès est équivalent ou inférieur d'un niveau dans la hiérarchie de traitement à l'accès de l'actionneur (14), incarné par la roue de réglage des éléments d'entrée manuelle (2) ou le(s) élément(s) de commande à clé (9).
